# EUROPEAN PATENT APPLICATION

(11) **EP 2 809 055 A2**
(43) Date of publication of application: **03.12.2014**
(21) Application number: 14159058.8
(22) Date of filing: 12.03.2014
(51) Int. Cl.: H04M 1/725, G06F 3/01

(54) **Method and apparatus for controlling screen display using environmental information**

(30) Priority: 27.05.2013 KR 20130059966
(71) Applicant: Samsung Electronics Co., Ltd., Suwon-si Gyeonggi-do 443-742 (KR)
(72) Inventor: Seo, Joon-kyu, Seoul (KR); Lee, Yong-yeon, Gyeonggi-do (KR); Yoon, Yeo-jun, Gyeonggi-do (KR); Choi, Young-joon, Gyeonggi-do (KR)
(74) Representative: Gover, Richard Paul

(57) **Abstract**

An electronic device is provided. The electronic device includes a touch screen configured to receive a touch input, and a controller configured to select a graphic image based on environmental information and provide the graphic image to a first layer, display the first layer on the touch screen, display a second layer that includes a user interface along with the first layer, display a third layer that includes a graphic object corresponding to the user interface along with the second layer, and change the graphic image of the first layer based on the touch input to the user interface of the second layer.

## Description

### CROSS-REFERENCE TO RELATED APPLICATION

This application claims priority from Korean Patent Application No. 10-2013-0059966, filed on May 27, 2013 in the Korean Intellectual Property Office, the disclosure of which is incorporated herein by reference in its entirety.

### BACKGROUND

### Field

Apparatuses and methods consistent with exemplary embodiments relate to an apparatus and a method for controlling a screen display in an electronic device including a touch screen, and more particularly, to an apparatus and a method for controlling display of a graphic image, a user interface, and a graphic object on a touch screen, using environmental information such as season information, altitude information, and direction information, in a portable terminal device including the touch screen.

### Description of the Related Art

A touch screen may be used in conjunction with a diverse number of electronic devices to display graphic and text and provide a user interface to allow the user to interact with the electronic device. The touch screen may detect contact and reacts to the contact. The touch screen may also display one or more soft keys, a menu, and a user interface. The user may touch the touch screen at a position corresponding to a user interface to interact with the electronic device.

Because the touch screen provides an intuitive user interface, the touch screen may be used as both a display and a user input device for a portable electronic device such as a smart phone.

The smart phone may use a touch screen as an input and output device, and may also include a diverse set of sensors to sense the external environment, such as a temperature sensor, a humidity sensor, a light sensor, an altitude sensor, and a geomagnetic sensor. The smart phone may provide the user with a natural and expressive experience by combining externally received information, the intuitive interface of the touch screen, and the diverse sensors.

### SUMMARY

According to an aspect of an exemplary embodiment, there is provided an electronic device including: a touch screen configured to receive a touch input, and a controller configured to select a graphic image based on environmental information and provide the graphic image to a first layer, display the first layer on the touch screen, display a second layer that includes a user interface along with the first layer, display a third layer that includes a graphic object corresponding to the user interface along with the second layer, and change the graphic image of the first layer based on the touch input to the user interface of the second layer.

The controller may change and display the graphic object of the third layer over time.

The controller may select the graphic object from among a plurality of graphic objects based on the environmental information, and provides the graphic object to the third layer.

The electronic device may further include a sensor, wherein the controller may change the graphic object based on a signal from the sensor, and provide the changed graphic object to the third layer.

The controller may display the graphic object around edges of the user interface.

The controller may change and display the graphic object based on a frequency of the touch input on the user interface.

The controller may change and display the graphic object according to position information of the electronic device.

According to an aspect of another exemplary embodiment, there is provided an electronic device including: a touch screen configured to receive a dragging input, and a controller configured to: select a graphic image based on environmental information, display a list on the touch screen, detect the dragging input in a state in which the list is displayed, to scroll the list according to the dragging input, and overlap and display the graphic image on the list while the list is being scrolled.

The controller may overlap and display the graphic image on the list according to the dragging input when the dragging is detected in a state in which a top of the list is displayed.

The controller may change a size of the graphic image and display the graphic image according to a moving distance of the dragging input.

According to an aspect of another exemplary embodiment, there is provided a method of displaying on a screen of an electronic device that includes a touch screen, the method including: selecting a graphic image based on environmental information and providing the graphic image to a first layer, displaying the first layer on the touch screen, displaying a second layer that includes a user interface along with the first layer, displaying a third layer that includes a graphic object corresponding to the user interface along with the second layer, and changing and displaying the graphic image of the first layer, based on a touch input to the user interface provided on the second layer.

The method may further include changing and displaying the graphic object of the third layer over time.

The method may further include selecting the graphic object from among a plurality of graphic objects based on the environmental information; and providing the graphic object to the third layer.

The method may further include changing the graphic object based on a signal output from a sensor included in the electronic device, and providing the changed graphic object to the third layer.

The method may further include displaying the graphic object around edges of the user interface.

The method may further include changing and displaying the graphic object based on frequency of the touch input on the user interface.

The method may further include changing and displaying the graphic object according to position information of the electronic device.

According to an aspect of another exemplary embodiment, there is provided a method of displaying on a screen of an electronic device that includes a touch screen, the method including: selecting a graphic image based on environmental information, displaying a list on the touch screen, detecting a dragging input in a state in which the list is displayed, scrolling the list in response to the dragging input, and overlapping and displaying the graphic image on the list while the list is being scrolled.

The method may further include detecting the dragging input in a state in which a top of the list is displayed, and overlapping and displaying the graphic image on the list in response to the dragging input.

The method may further include changing a size of a graphic image and displaying the graphic image according to a moving distance of the dragging.

According to an aspect of another exemplary embodiment, there is provided a user terminal device including: a touch screen configured to display a screen including a plurality of layers that overlap, and a controller configured to disperse at least one of a graphic image corresponding to environmental information, a user interface, and a graphic object corresponding to the user interface on the plurality of layers, and adjust a display state of each of the plurality of layers according to an input to the touch screen.

### BRIEF DESCRIPTION OF THE DRAWING

The above and/or other aspects will be more apparent by describing certain exemplary embodiments with reference to the accompanying drawings, in which:
FIG. 1 is a block diagram of a configuration of an electronic device according to an exemplary embodiment;
FIG. 2 shows layers displayed on a touch screen of the electronic device according to an exemplary embodiment;
FIG. 3 is a flowchart showing an example of a process of displaying a graphic image, a user interface, and a graphic object based on environmental information on the touch screen of the electronic device according to an exemplary embodiment;
FIGs. 4A and 4B show an example of a process of visually changing and displaying a graphic object provided to a third layer of the touch screen of the electronic device over time according to one or more exemplary embodiments;
FIGs. 5A to 5C show a graphic object displayed on the third layer of the touch screen of the electronic device based on environmental information according to one or more exemplary embodiments;
FIGs. 6A and 6B show that a graphic image is visually changed and displayed on a first layer of the touch screen of the electronic device based on the user's input according to one or more exemplary embodiments;
FIGs. 7A to 7D show that a graphic object is visually changed and displayed on the touch screen of the electronic device based on the frequency of the user's input according to one or more exemplary embodiments;
FIGs. 8A and 8B show that a graphic object is displayed on the touch screen of the electronic device when the user's unintentional input occurs according to one or more exemplary embodiments;
FIGs. 9A to 9D show that a graphic image is displayed on the touch screen of the electronic device by reflecting a state of another user's device according to one or more exemplary embodiments;
FIG. 10 is a flowchart showing a process of displaying a graphic image corresponding to operation of scrolling a list displayed on the touch screen of the electronic device according to an exemplary embodiment;
FIGs. 11A to 11C show a graphic image displayed when the user changes a home screen according to one or more exemplary embodiments;
FIGs. 12A to 12C show a graphic image corresponding to operation of scrolling a list displayed on the touch screen of the electronic device according to one or more exemplary embodiments; and
FIGs. 13A to 13E show that the size of a graphic image is changed and displayed to correspond to a moving distance of the user's dragging operation when a list displayed on the touch screen of the electronic device is not scrolled any longer according to one or more exemplary embodiments.

### DETAILED DESCRIPTION OF THE EXEMPLARY EMBODIMENTS

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments can be carried out without those specifically defined matters. Also, well-known functions or constructions are not described in detail because they would obscure the invention with unnecessary detail.

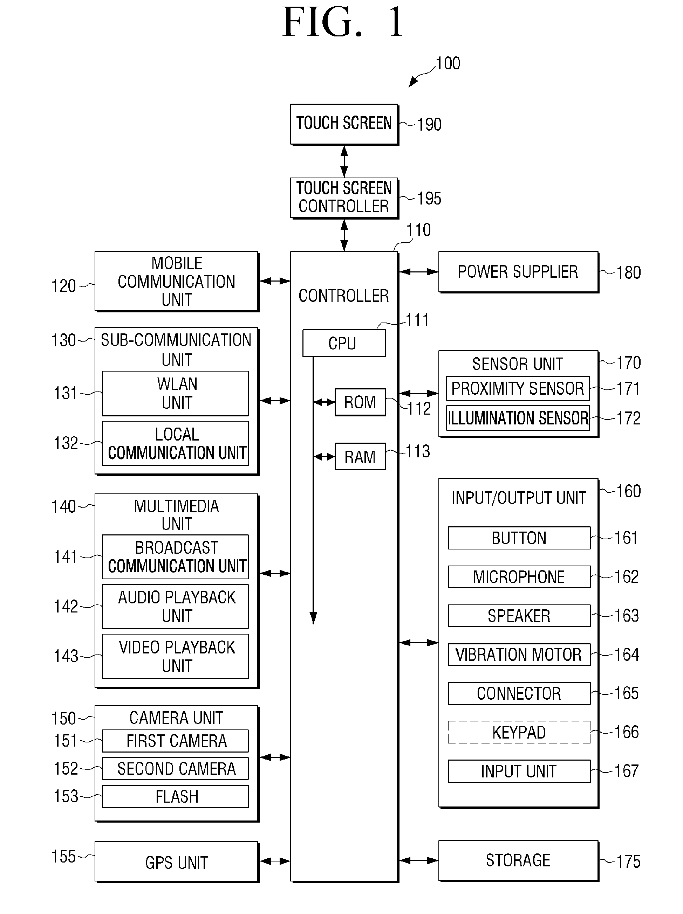

FIG. 1 is a block diagram of a configuration of an electronic device according to an exemplary embodiment. With reference to FIG. 1, an electronic device 100 may be connected to an external device using a mobile communication unit 120, a sub-communication unit 130, or a connector 165.

The "external device" may include electronic devices such as a mobile phone, a smart phone, an input unit, a tablet personal computer (PC), and/or a server. The electronic device 100 may be a device that is portable and is capable of transmitting and receiving data. The electronic device 100 may include at least one touch screen 190. The electronic device 100 may be implemented as diverse types of user terminal devices or display devices such as a mobile phone, a smart phone, a tablet PC, a laptop PC, a personal digital assistant (PDA), a MP3 player, an electronic picture frame, a kiosk, a 3-D television (TV), a smart TV, a light emitting diode (LED) TV, and a liquid crystal display (LCD) TV, or a device that is capable of transmitting data to or receiving data from a peripheral device or a device which is far from the electronic device 100.

The electronic device 100 may include a touch screen 190 and a touch screen controller 195. The touch screen 190 and the touch screen controller 195 may also become a display.

In addition, the electronic device 100 may include a controller 110, a mobile communication unit 120, a sub-communication unit 130, a multimedia unit 140, a camera unit 150, a global positioning system (GPS) unit 155, an input/output unit 160, a sensor unit 170, a storage 175, and a power supplier 180.

The sub-communication unit 130 may include at least one of a wireless local area network (WLAN) unit 131 and a local communication unit 132. The multimedia unit 140 may include at least one of a broadcast communication unit 141, an audio playback unit 142, and a video playback unit 143. The camera unit 150 may include at least one of a first camera 151, a second camera 152, and a flash 153. The input/output unit 160 may include at least one of a button 161, a microphone 162, a speaker 163, a vibration motor 164, a connector 165, a keypad 166, and an input unit 167. The sensor unit 170 may include a proximity sensor 171 and an illumination sensor 172.

The controller 110 may include a central processing unit (CPU) 111, a read-only memory (ROM) 112 which stores a control program to control the electronic device 100, and a random-access memory (RAM) 113 which stores a signal or data input from the outside of the electronic device 100 or which may be used as a memory area for a job performed by the electronic device 100.

The controller 110 controls overall operation of the electronic device 100 and signal flow between the components 120 to 195 of the electronic device 100, and processes data. The controller 110 controls power supply from the power supplier 180 to the components 120 to 195. In addition, the controller 110 executes an operating system and applications which are stored in the storage 175.

The CPU 111 may include a graphic processing unit (GPU, not shown) which processes graphics. The CPU 111 may be implemented with a system on chip (SoC) in which a core and a GPU are integrated on a single chip. The CPU 111 include a single core, a dual core, a triple core, a quad core, and a multiple core. The CPU 111, the ROM 112, and the RAM 113 are connected to one another through a local bus.

The controller 110 may control the mobile communication unit 120, the sub-communication unit 130, the multimedia unit 140, the camera unit 150, the GPS unit 155, the input/output unit 160, the sensor unit 170, the storage 175, the power supplier 180, the touch screen 190, and the touch screen controller 195.

The mobile communication unit 120 connects the electronic device 100 to an external device through mobile communication using one or more antennas according to control of the controller 110. The mobile communication unit 120 may transmit a voice call, a video call, a text message (SMS), a multimedia message (MMS), and a wireless signal for data communication to or receive the same from a mobile phone, a smart phone, a tablet PC, or other electronic devices which has a phone number input to the electronic apparatus 100.

The sub-communication unit 130 may include at least one of the WLAN unit 131 and the local communication unit 132. For example, the sub-communication unit 130 may include only the WLAN unit 131, include only the local communication unit 132, or include both the WLAN unit 131 and the local communication unit 132.

The WLAN unit 131 may access the internet at a location in which an access point (AP) is installed, according to control of the controller 110. The WLAN module 131 supports the WLAN standard (IEEE802.11x) of the Institute of Electrical and Electronics Engineers (IEEE). The local communication module 132 allows wireless local communication between the electronic device 100 and an external device according to control of the controller 110. Local communication methods may include Bluetooth, infrared data association (IrDA), near field communication (NFC), and so on.

The electronic device 100 may include one or more of the mobile communication unit 120, the WLAN unit 131, and the local communication unit 132 according to the performance. For example, the electronic device 100 may include combination of the mobile communication unit 120, the WLAN unit 131, and the local communication unit 132 according to the performance. In the exemplary embodiments, the term "communication unit" includes the mobile communication unit 120 and the sub-communication unit 130.

The multimedia unit 140 may include a broadcast communication unit 141, an audio playback unit 142, and a video playback unit 143. The broadcast communication unit 141 may receive a broadcast signal (for example, a TV broadcast signal, a radio broadcast signal, or a data broadcast signal) and broadcast additional information (for example, an electronic program guide (EPG) or an electronic service guide (ESG)) from a broadcasting station through a broadcast communication antenna according to control of the controller 110, and may play back the received broadcast signal using the touch screen, video codec unit, and audio codec unit.

The audio playback unit 142 may play back an audio source (for example, an audio file having a filename extension such as mp3, wma, ogg, or wav) which is pre-stored in the storage 175 of the electronic device 100 or is received from the outside of the electronic device 100 using the audio codec unit according to control of the controller 110.

The video playback unit 143 may play back a digital video file (for example, a file having a filename extension such as mpeg, mpg, mp4, avi, mov, or mkv) which is pre-stored in the storage 175 of the electronic device 100 or is received from the outside of the electronic device 100 using the video codec unit according to control of the controller 110. Most applications which can be installed in the electronic device 100 may play back audio and video using the audio codec unit or the video codec unit.

It is well known to those skilled in the art that diverse kinds of video and audio codec units are produced and distributed. In addition, the video playback unit 143 may play back an audio source using the video codec unit or the audio codec unit.

The multimedia unit 140 may include the audio playback unit 142 and the video playback unit 143 except for the broadcast communication unit 141. The audio playback unit 142 or the video playback unit 143 of the multimedia unit 140 may be included in the controller 110. In the exemplary embodiments, the term "video codec unit" includes one or more video codec units, and the term "audio codec unit" includes one or more audio codec units.

The camera unit 150 may include at least one of a first camera 151 and a second camera 152 which photograph a still image or video according to control of the controller 110. The camera unit 150 may include one or both of the first camera 151 and the second camera 152. The first camera 151 or the second camera 152 may include a supplementary light source (for example, a flash 153) which provides an amount of light which is needed to take a photograph.

The GPS unit 155 may receive radio waves from a plurality of GPS satellites moving around the earth. The electronic device 100 may calculate its location using a time of arrival from a GPS satellite to the GPS unit 155.

The input/output unit 160 may include at least one of a plurality of buttons 161, a microphone 162, a speaker 163, a vibration motor 164, a connector 165, a keypad 166, and an input unit 167.

The buttons 161 may not be physical buttons but be touch buttons. In addition, the buttons 161 may be displayed on the touch screen 190.

The microphone 162 externally receives voice or sound, and generates an electrical signal according to control of the controller 110. The electrical signal generated by the microphone 162 may be converted by the audio codec unit, and be stored in the storage 175 or be output through the speaker 163.

The speaker 163 may output sounds corresponding to diverse signals (for example, a wireless signal, a broadcast signal, an audio source, a video file, or photographing) of the mobile communication unit 120, the sub-communication unit 130, the multimedia unit 140, or the camera unit 150 to the outside of the electronic device 100 using the audio codec unit according to control of the controller 110.

The speaker 163 may output sounds (for example, a button manipulation sound corresponding to calling or a ring back tone) corresponding to functions of the electronic device 100.

The vibration motor 164 converts an electrical signal into a mechanical vibration according to control of the controller 110. For example, when the electronic device 100 in vibration mode receives a call from another device, the vibration motor 164 operates. One or more vibration motors 164 may be provided in the electronic device 100. The vibration motor 164 may vibrate the electronic device 100 in whole or in part.

The connector 165 may act as an interface to connect the electronic device 100 to an external device or to a power source. According to control of the controller 110, the electronic device 100 may transmit data stored in the storage 175 to an external device or receive data from an external device through a cable which is connected to the connector 165. In addition, the electronic device 100 may receive power from a power source or charge a battery through a cable which is connected to the connector 165.

The keypad 166 may receive the user's key input for control of the electronic device 100. The keypad 166 may include a physical keypad provided on the electronic device 100 or a virtual keypad displayed on the touch screen 190. The physical keypad may be excluded according to performance or structure of the electronic device 100.

The input unit 167 may touch or select an object (for example, a menu, text, an image, a figure, and an icon) displayed on the touch screen 190 of the electronic device 100. For example, the input unit 167 may touch the touch screen of capacitive, resistive, electromagnetic induction, or electromagnetic reaction (EMR) method, or enter text using a virtual keyboard.

The sensor unit 170 may include a proximity sensor 171 which detects approach to the electronic device 100, and an illumination sensor 172 which detects the amount of light around the electronic device 100. Sensors may be added to or deleted from the sensor unit 170 according to performance of the electronic device 100.

For example, the sensor unit 170 may further include an acceleration sensor which detects a slope of three axes applied to the electronic device 100, and a gravity sensor which detects gravity action direction.

Each sensor of the sensor unit 170 detects the state of the electronic device 100 or environmental information of the electronic device 100, generates a signal corresponding to the detection, and transmits the signal to the controller 110.

The storage 175 may store an input or output signal or data corresponding to operation of the mobile communication unit 120, the sub-communication unit 130, the multimedia unit 140, the camera unit 150, the GPS unit 155, the input/output unit 160, the sensor unit 170, and the touch screen according to control of the controller 110. The storage 175 may also store a control programs to control the electronic device 100 or the controller 110, a graphical user interface (GUI) related to an application which is provided by the manufacturer or is externally downloaded, images to provide a GUI, user information, documents, database, or related data.

In the exemplary embodiments, the term "storage" includes the storage 175, the ROM 112 and the RAM 113 of the controller 110, and a memory card (not shown, for example, a micro secure digital (SD) card and a memory stick) mounted in the electronic device 100. In addition, the storage may include a non-volatile memory, a volatile memory, a hard disk drive (HDD), and a solid state drive (SSD).

The power supplier 180 may supply power to one or more batteries of the electronic device 100 according to control of the controller 110. In addition, the power supplier 180 may supply power from an external power source to the electronic device 100 through a cable which is connected to the connector 165.

The touch screen 190 provides the user with user interfaces, such as a GUI, corresponding to diverse services (for example, call, data transmission, broadcasting, photographing, video, or an application). The touch screen 190 transmits analog signals corresponding to one or more touches input through a GUI to the touch screen controller 195. The touch screen 190 may receive one or more touches through the user's body (for example, fingers including a thumb) or the touchable input unit 167.

In the exemplary embodiments, the touch is not limited to contact between the touch screen 190 and the user's body or the touchable input unit 167, but includes non-contact (for example, hovering indicating that the user's body or the input unit 167 approaches within a detectable distance (for example, lower than 30mm) of the touch screen 190). The non-contact distance which is detectable by the touch screen 190 may vary according to performance or structure of the electronic device 100.

The touch screen 190 may be implemented in resistive, capacitive, infrared, or acoustic wave method.

The touch screen 190 may include an electromagnetic reaction (EMR) pad which is capable of sensing touch of a stylus pen (not shown, referred to hereinbelow as "pen") of an active method.

The pen includes a coil therein, and generates a magnetic field at a particular position of the EMR pad using the coil. The EMR pad may detect a position touched by the pen on the touch screen 190 by detecting the position of the generated magnetic field.

The touch screen controller 195 transmits a signal (for example, X and Y coordinates corresponding to the touched position) corresponding to one or more touches received from the touch screen 190, to the controller 110. The controller 110 may control the touch screen 190 using the signal received from the touch screen controller 195. For example, in response to the input touch, the controller 110 may show that a shortcut icon displayed on the touch screen 190 is selected, or may execute an application corresponding to a selected shortcut icon.

The controller 110 may calculate the X and Y coordinates corresponding to the touch location using the signal received from the touch screen controller 195. In this exemplary embodiment, the single touch screen controller 195 controls the touch screen 190. The touch screen controller 195 may be included in the controller 110 according to performance or structure of the electronic device 100.

At least one of the components of the electronic device 100 shown in FIG. 1 may be added or deleted according to performance of the electronic device 100. In addition, it is obvious to those skilled in the art that the locations of the components may vary according to performance or structure of the electronic device 100.

In particular, from among the components shown in FIG. 1, components which are not directly related to operation of the exemplary embodiments described below may be deleted from the electronic device 100 consistent with the exemplary embodiments.

For example, the electronic device 100 may include the touch screen 190 and the controller 110. The touch screen 190 displays diverse types of screens and senses the user's input. The controller 110 may generate a plurality of layers and compose a screen by overlapping the layers in sequence. The touch screen 190 may display the composed screen. Accordingly, the user may recognize diverse objects and images which are dispersed on the plurality of layers as a single screen.

More specifically, the controller 110 may select one of a plurality of graphic images based on environmental information, give the selected one to a first layer, and display the first layer on the touch screen 190. In addition, the controller 110 may display a second layer which provides a user interface behind the first layer, and display a third layer which provides a graphic object corresponding to the user interface behind the second layer. In addition, the controller 110 may visually change the graphic image on the first layer based on the user's input to touch the user interface on the second layer. The display order of each layer may vary. A method for composing a screen using a plurality of layers is described below in greater detail.

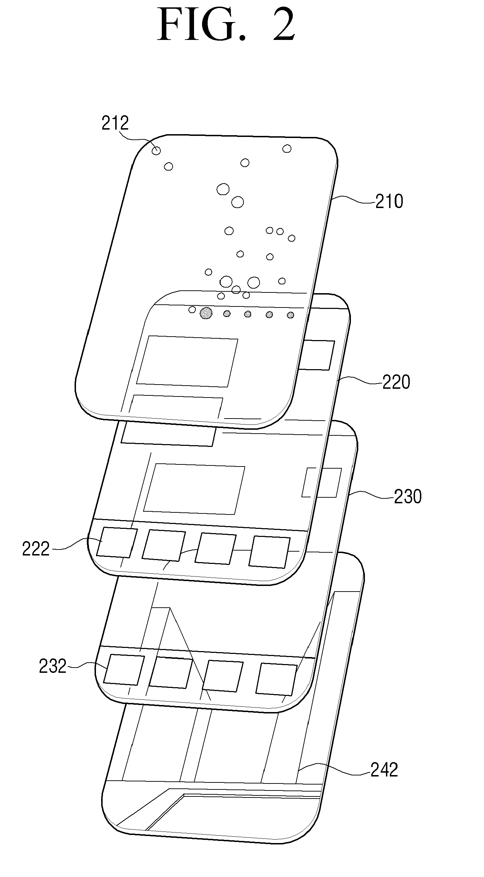

FIG. 2 shows layers displayed on the touch screen 190 of the electronic device 100 according to an exemplary embodiment. With reference to FIGs. 1 and 2, a first layer 210, a second layer 220, a third layer 230, and a background image 242 are displayed on the touch screen 190.

The first layer 210 may display a graphic image 212 based on environmental information. The second layer 220 may be displayed behind the first layer 210. The second layer 220 may display a user interface 222 which is able to interact with the user. The third layer 230 may be displayed behind the second layer 220. The third layer 230 may display a graphic object 232. The background image 242 may be displayed behind the third layer 230.

In this exemplary embodiment, the second layer 220 is displayed behind the first layer 210, and the third layer 230 is displayed behind the second layer 220. However, the order of the layers may vary. In addition, the number of layers may be more than three or be less than three. Accordingly, the arrangement of the user interface and the graphic object which are displayed according to the layer may vary.

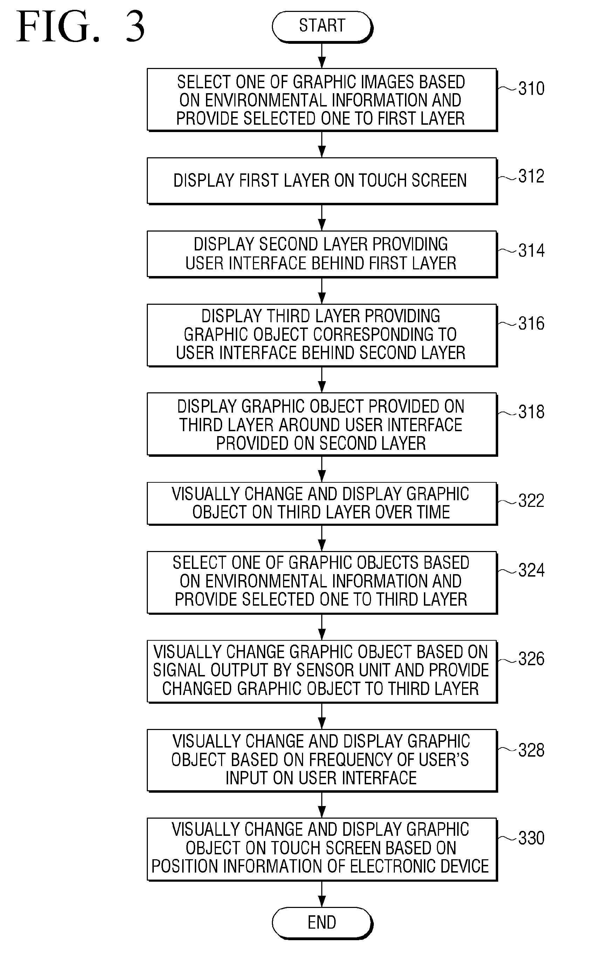

FIG. 3 is a flowchart showing a process of displaying a graphic image, a user interface, and a graphic object based on environmental information on the touch screen 190 of the electronic device 100 according to an exemplary embodiment.

With reference to FIGs. 1 and 3, in operation S310, the controller 110 selects one of a plurality of graphic images based on environmental information, and provides the selected one to the first layer 210. The environmental information may include weather information, position information of the electronic device 100, altitude information, and direction information. The weather information may be externally received through the mobile communication unit 120 or the sub-communication unit 130. The weather information may be information regarding the weather, such as "sunny", "cloudy", "rainy", "snowy", and "lightening".

In addition, the environmental information may include environmental information of another user's electronic device which is not the user's electronic device 100. The electronic device 100 may receive environmental information of another user's electronic device through the communication unit.

The position information may be received through the GPS unit 155, and provide the position of the electronic device 100. The altitude information and the direction information may be obtained by the sensor unit 170. The altitude information indicates an altitude of the current position of the electronic device 100. The direction information indicates the direction of the electronic device 100.

In addition, the electronic device 100 may receive position information, altitude information and direction information of another user's electronic device through the communication unit.

The controller 110 may receive environmental information and select one of the plurality of graphic images based on the environmental information. The controller 110 may select one of the plurality of graphic images corresponding to the environmental information and provide the selected one to the first layer 210. The plurality of graphic images may be graphic images corresponding to weather information. When the weather is "sunny", the controller 110 may provide a "graphic image with the sun" to the first layer 210. When the weather is "rainy", the controller 110 may provide a "rainy graphic image" to the first layer 210. Accordingly, the first layer 210 may display the "rainy graphic image".

When the weather is "snowy", the controller 110 may provide a "snowy graphic image" to the first layer 210. Accordingly, the first layer 210 may display the "snowy graphic image". When the lightening flashes, the controller 110 may provide a "lightening graphic image" to the first layer 210. Accordingly, the first layer 210 may display the "lightening graphic image".

In operation S312, the controller 110 may display the first layer 210 on the touch screen 190. In operation S314, the second layer 220 which provides a user interface may be displayed behind the first layer 210. The user interface may interact with the user. The user interface may include a soft button and an icon which is selected by the user, and a widget which provides the user with information.

In operation S316, the controller 110 may display the third layer 230 which provides a graphic object 232 corresponding to the user interface behind the second layer 220. The graphic object 232 may correspond to the user interface 222 one to one. For example, when the icon 222 is displayed on a lower left portion of the second layer 220, the graphic object 232 may be displayed on a lower left portion of the third layer 230.

In operation S318, the controller 110 may display the graphic object 232 provided on the third layer 230 around the user interface 222 provided on the second layer 220. Because the second layer 220 and the third layer 230 overlap, the graphic object 232 may be visually displayed around the user interface 222.

In operation S322, the controller 110 may visually change and display the graphic object on the third layer 230 over time. The controller 110 may visually change the graphic object by changing the shape, size, color or brightness of the graphic object. The controller 110 may change the shape, size, color or brightness of the graphic object over time. For example, when the weather is "cloudy" at the position of the electronic device 100, the graphic object may be "cloud". The controller 110 may provide the user with more realistic user interface by changing and displaying the shape, size, color or brightness of cloud over time. When the weather is "snowy" at the position of the electronic device 100, the graphic object may be "snow". The controller 110 may provide the user with more realistic user interface by changing and displaying the shape or covered amount of snow over time.

In operation S324, the controller 110 may select one of a plurality of graphic objects based on the environmental information and provide the selected one to the third layer 230. There may be a plurality of graphic objects corresponding to environmental information. For example, the graphic objects may represent "snow", "cloud", and "shadow". When it snows, the controller 110 may select the graphic object "snow" based on the weather information, and display snow around the user interface.

In operation S326, the controller 110 may visually change the graphic object based on a signal output by the sensor unit 170, and provide the changed graphic object to the third layer 230. For example, based on a signal received from the illumination sensor 172 of the sensor unit 170, the controller 110 may change the brightness of the graphic object. The illumination sensor 172 may measure the brightness around the electronic device 100. When it is bright around the electronic device 100, the controller 110 may dim the graphic object, and when it is dark around the electronic device 100, the controller 110 may brighten the graphic object. The sensor unit 170 may include a gyro sensor and a geomagnetic sensor. The controller 110 may determine the direction of the electronic device 100 based on signals output from the gyro sensor and the geomagnetic sensor, and change the shape of the graphic object according to the direction of the electronic device 100.

In operation S328, the controller 110 may visually change and display the graphic object according to the frequency of the user's input on the user interface displayed on the second layer 220. For example, if the user frequently runs a particular application, the controller 110 may display a graphic object around an icon to run the application and visually change the graphic object by increasing the size of the graphic object.

In operation S330, the controller 110 may visually change and display the graphic object on the touch screen 190 based on the position information of the electronic device 100. The position information may include direction information. The controller 110 may obtain the position information including the direction information based on signals received from the GPS unit and the sensor unit. The controller 110 may change and display the size, shape, color or brightness of the graphic object based on the position information.

In FIG. 3, a screen display method according to diverse exemplary embodiments is described in detail. However, the screen display method may be implemented with a simpler flowchart. More specifically, the screen display method may include selecting one of a plurality of graphic images based on environmental information and providing the selected one to the first layer, displaying the first layer on the touch screen, displaying the second layer which provides a user interface behind the first layer, displaying the third layer which provides a graphic object corresponding to the user interface behind the second layer, and visually changing and displaying a graphic image provided on the first layer based on the user's input of touching the user interface provided on the second layer

Besides, the process of displaying the screen may be implemented in diverse orders according to diverse exemplary embodiments, but these exemplary embodiments are merely modified examples of the screen display method described with reference to FIG. 3. Accordingly, illustration and description of detailed flowcharts are omitted.

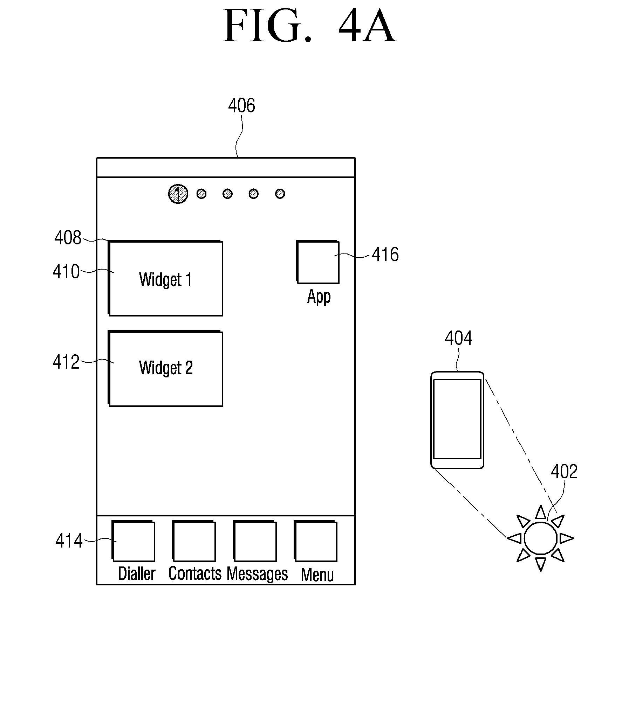

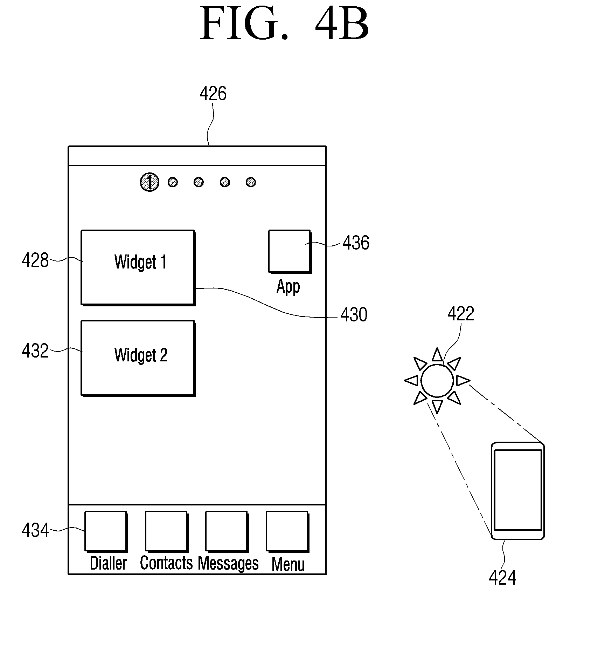

FIGs. 4A and 4B show an example of a process of visually changing and displaying a graphic object provided to the third layer 230 of the touch screen of the electronic device over time. FIG. 4A shows a user interface and a graphic object which are displayed on the touch screen 406 when the sun 402 is at the lower right side of the electronic device 404. FIG. 4B shows a user interface and a graphic object which are displayed on the touch screen 426 when the sun 422 is at the upper left side of the electronic device 424. Because the position of the sun changes over time on the basis of the electronic device, the display position, size and brightness of the graphic object displayed around the user interface may change.

In addition, the display position, size and brightness of the graphic object displayed around the user interface may change according to the direction of the electronic device.

Furthermore, the display position, size and brightness of the graphic object displayed around the user interface may change according to whether the electronic device is indoors or outdoors.

With reference to FIGs. 1, 2, and 4A, user interfaces 410, 412, 414 and 416 are displayed on a touch screen 406. The sun 402 is at the lower right side of electronic device 404. The user interfaces 410 and 412 may be widgets. The user interface 416 may be an icon to run an application. The user interface 414 may be an icon to run a frequently used application. The user interfaces 410, 412, 414 and 416 may be displayed on the second layer 220. A graphic object may be displayed at the edge of the user interfaces 410, 412, 414 and 416. The graphic object may be displayed on the third layer 230 which is different from the second layer 220 displaying the user interfaces.

The graphic object may be displayed on a location corresponding to a location of the user interfaces 410, 412, 414 and 416. For example, a graphic object 408 representing "shadow" is displayed at the edge of the user interface 410. Because the sun 402 is at the lower right side of the electronic device 404, the graphic object 408 may be displayed at the left and upper edges of the user interface 410. The user interface 410 may be displayed on the second layer 220, and the graphic object 408 may be displayed on the third layer 230.

The controller 110 may visually change a graphic object on the third layer 230 over time. The sun moves over time. Although the electronic device stays at the same position, the position of the sun changes according to change in time. Accordingly, as the sun 402 moves, the position of the graphic object 408 displayed at the edge of the user interface 410 may change. Therefore, because the position of a shadow changes according to the position of the sun, the graphic object 408 representing "shadow" may change its display position, size, shape, color or brightness according to the position of the sun 402.

The controller 110 may visually change a graphic object based on a signal output by the sensor unit 170 and provide the graphic object to the third layer 230. Visually changing the graphic object 408 indicates changing the display position, size, shape, color or brightness of the graphic object 408. The controller 110 may determine the direction of the electronic device 404 based on a signal output by the sensor unit 170. The controller 110 may change the display position, size, shape, color or brightness of the graphic object 408 according to the direction of the electronic device 404. The controller 110 may visually change and display the graphic object 408 according to position information of the electronic device 404. The controller 110 may determine the position of the electronic device 404 based on a signal received from the GPS unit 155, the mobile communication unit 120, or the sub-communication unit 130. The controller 110 may determine the position of the sun 402 based on a signal received from the mobile communication unit 120 or the sub-communication unit 130. The controller 110 may determine where the sun 402 is positioned on the basis of the electronic device 404 based on the direction and position of the electronic device 404 and the position of the sun 402, and may change the display position, size, shape, color or brightness of the graphic object 408.

Comparing FIG. 4A with FIG. 4B, the display position of the graphic object 408 changes according to the position of the sun. In FIG. 4A, the graphic object 408 is positioned at the upper and left edges of the user interface 410. In FIG. 4B, the graphic object 430 is positioned at the lower and right edges of each user interface 428, 432, and 436.

FIG. 4B shows the user interfaces 428, 432, 434, and 436 and the graphic object 430 when the sun 422 is at the upper left side of the electronic device 424. The user interfaces 428, 432, 434, and 436 are displayed on the second layer 220. The graphic object 430 is displayed at the lower and right edges of the user interfaces 428, 432, 434, and 436. Because the graphic object 430 represents shadow, the controller 110 may visually change and display the graphic object 430 according to relative position of the sun 422 and the electronic device 424. Because the position of the sun 422 changes over time, the controller 110 may change the display position, size, shape, color or brightness of the graphic object 430 over time.

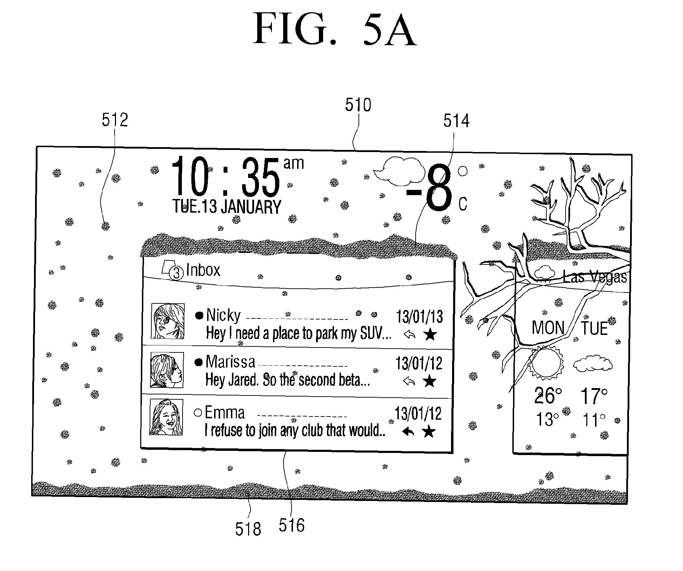

FIGs. 5A to 5C show diverse types of graphic objects displayed on the third layer 230 of the touch screen 190 of the electronic device 100 based on environmental information. With reference to FIGs. 1, 2, and 5A to 5C, the touch screen 190 displays user interfaces 516, 526, and 534, graphic objects 514 and 524, and graphic images 512, 522, and 532. The user interfaces 516, 526, and 534 may be widgets which provide the user with information. The user interfaces 516, 526, and 534 may be displayed on the second layer 220. The graphic objects 514 and 524 may be displayed around the user interfaces 516, 526, and 534 or above the user interfaces 516, 526, and 534. The graphic object 514 and 524 may be displayed on the third layer 230 or the first layer 210.

The controller 110 may select one of the plurality of graphic images 512, 522, and 532 based on environmental information, and provide the selected one to the first layer 210. In addition, the controller 110 may select one of the plurality of graphic objects 514 and 524 based on environmental information, and provide the selected one to the third layer 230. The controller 110 may control a graphic object provided to the third layer 230 to be displayed around a user interface provided to the second layer 220.

For example, FIG. 5A shows the graphic image 512, the user interface 516, and the graphic object 514 which are displayed on the touch screen 510 when it snows. On the touch screen 510, the snowy graphic image 512 is displayed, and a snow accumulation image 514 is displayed on the upper edge of the widget 516.

The controller 110 may receive weather information from the outside of the electronic device 100 through the mobile communication unit 120 or the sub-communication unit 130, or the controller 110 may determine the weather using the temperature sensor and the humidity sensor which are included in the electronic device 100. Environmental information may include weather information. The controller 110 determines that the weather is "snowy", selects the "snowy" graphic image 512 from among the plurality of graphic images 512, 522, and 532, and provides the selected one to the first layer 210. The controller 110 selects the "snow accumulation" graphic object 514 between the graphic objects 514 and 524, and provides the selected one to the third layer 230.

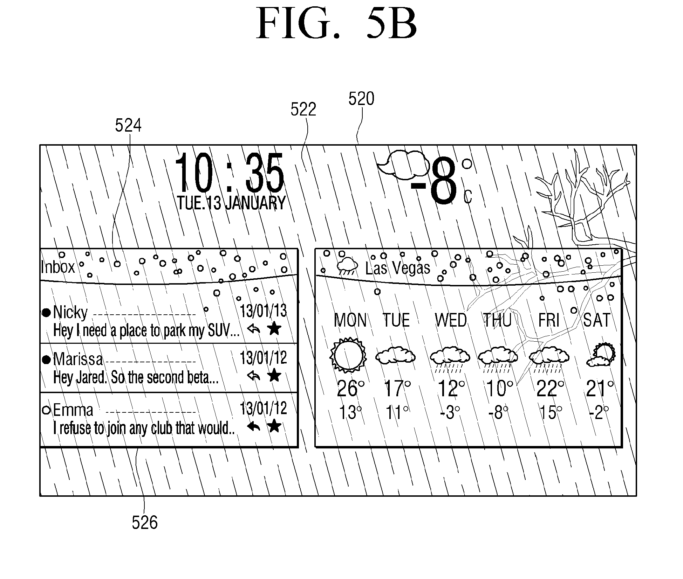

FIG. 5B shows the graphic image 522, the user interface 526, and the graphic object 524 which are displayed on the touch screen 520 when it rains. On the touch screen 520, the rainy graphic image 522 is displayed, and a water drop image 524 is displayed on the upper edge of the widget 526.

The controller 110 determines that the weather is "rainy", selects the "rainy" graphic image 522 from among the plurality of graphic images 512, 522, and 532, and provides the selected one to the first layer 210. The controller 110 selects the "water drop" graphic object 524 between the graphic objects 514 and 524, and provides the selected one to the third layer 230.

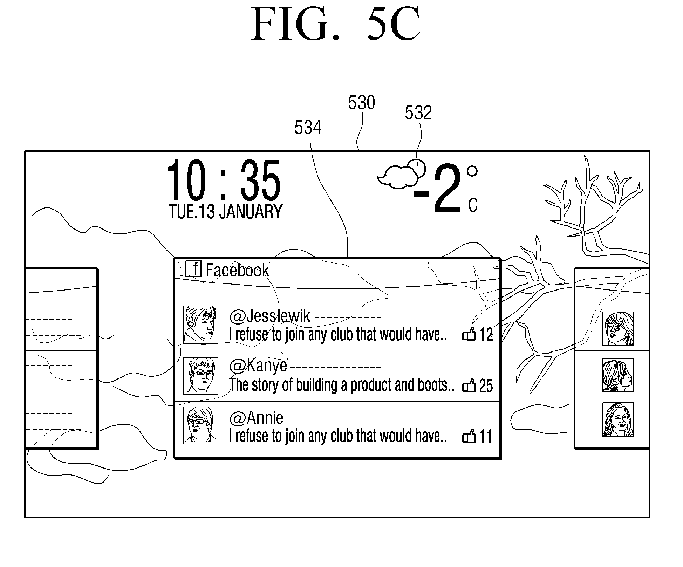

FIG. 5C shows the graphic image 532 and the user interface 534 which are displayed on the touch screen 530 when it is a sunny day. When it is sunny, a graphic object may not be displayed. On the touch screen 530, the sunny graphic image 532 is displayed. The controller 110 determines that the weather is "sunny", selects the "sunny" graphic image 532 from among the plurality of graphic images 512, 522, and 532, and provides the selected one to the first layer 210.

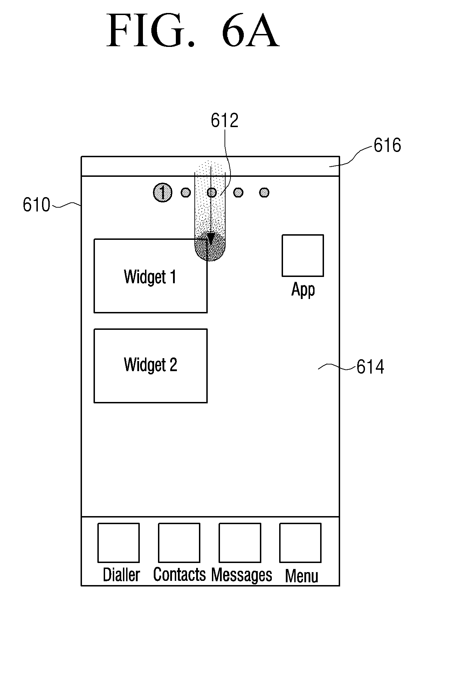

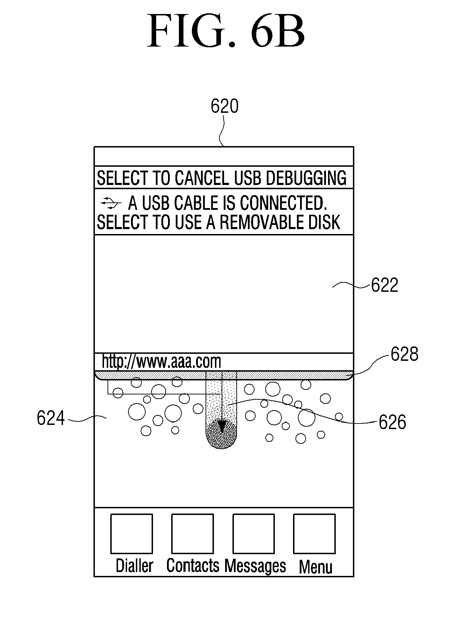

FIGs. 6A and 6B show that a graphic image is visually changed and displayed on the first layer 210 of the touch screen of the electronic device based on the user input according to an exemplary embodiment. With reference to FIGs. 2 and 6A, the touch screen 610 displays a home screen 614 that may include widgets, icons, and a toolbar. The widgets, the icons, and the toolbar may be user interfaces to allow a user to interact with the device. The user interfaces may be displayed on the second layer 220. The controller 110 may visually change the graphic image on the first layer 210 based on the user input from the second layer 220. In order to visually change the graphic image, the controller 110 may change the size, shape, or brightness of the graphic image.

The user may touch and drag 612 the toolbar 616 which is displayed at the upper edge of the touch screen 610. FIG. 6B shows that a hidden area 622 appears as the user drags the toolbar 628. When the user drags 626 the toolbar 628 down, the hidden area 622 is displayed on the touch screen 620 and a graphic image 624 is displayed on the touch screen 620. For example, when it snows, the controller 110 selects a "snowy image" as a graphic image.

When the user drags 626 the toolbar 628 down, the controller 110 displays the "snowy image" 624 under the toolbar 628. The controller 110 may move the toolbar 628 as the user drags the toolbar 628, and may display the "snowy image" on the touch screen 620 at the same time.

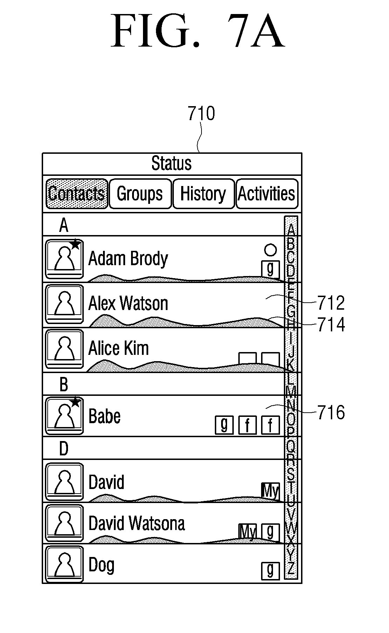

FIGs. 7A to 7D show that a graphic object may be visually changed and displayed on the touch screen of the electronic device based on the frequency of a user input through a user interface according to an exemplary embodiment. Touch screens 710, 720, 730, and 740 may display different forms of graphic objects 714, 724, 736, and 744 according to user interfaces 716, 726, 734, and 746, and environmental information, respectively. The controller 110 may visually change and display the graphic objects 714, 724, 736, and 744 based on the frequency of the user's input to the user interfaces 716, 726, 734, and 746.

With reference to FIG. 7A, the touch screen 710 displays a list of contacts. The list includes a plurality of contact items. The contact items include user interfaces which are able to interact with the user. For example, user interfaces 712 and 716 are a portion of the contact items. The touch screen 710 may display a snow accumulation graphic object 714. The shape of a graphic object displayed on a user interface may visually change according to the frequency of the user's touches of the user interfaces. For example, no graphic object may be displayed on the user interface 716 which is frequently touched by the user. Instead, the graphic object 714 is displayed on the user interface 712 which is not frequently touched by the user. Specifically, if the frequency of the user's touches on the contact item 716 is 10 times or more, no graphic object may be displayed on the contact item 716. If the user touches a contact item "David" between 5 times and 9 times, a graphic object showing a small amount of snow accumulation may be displayed. If the user touches the contact item 712 4 times or less, the graphic object 714 showing a large amount of snow accumulation may be displayed.

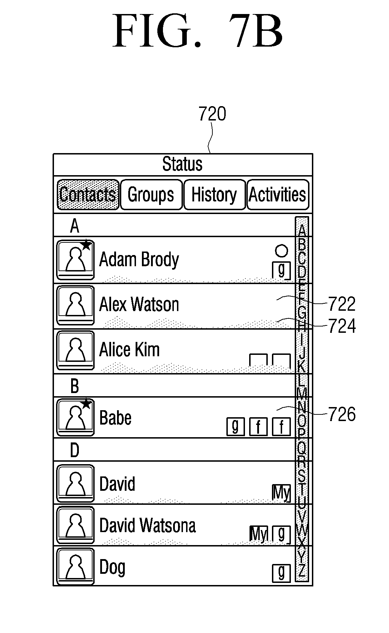

With reference to FIG. 7B, the touch screen 720 displays a list of contacts. The list includes a plurality of contact items. The contact items include user interfaces which are able to interact with the user. For example, user interfaces 722 and 726 are a portion of the contact items. The touch screen 720 may display a dust accumulation graphic object 724. The shape of a graphic object displayed on a user interface may visually change according to the frequency of the user's touches of the user interface. For example, no graphic object may be displayed on the user interface 726. Instead, the graphic object 724 may be displayed on the user interface 722. Specifically, if the frequency of the user's touches on a contact item is 10 times or more, no graphic object may be displayed on the contact item. If the user touches a contact item between 5 times and 9 times, a graphic object showing a small amount of dust accumulation may be displayed. If the user touches a contact item 4 times or less, a graphic object showing a large amount of dust accumulation may be displayed. The frequency of touch which is a standard to display a graphic object may be set to diverse values.

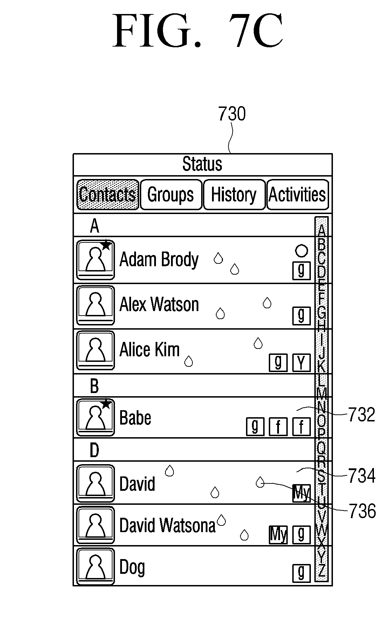

With reference to FIG. 7C, the touch screen 730 displays a list of contacts. The list includes a plurality of contact items. The contact items include user interfaces which are able to interact with the user. For example, user interfaces 732 and 734 are a portion of the contact items. The touch screen 730 may display a water drop graphic object 736. The shape of a graphic object displayed on a user interface may visually change according to the frequency of the user's touches of the user interface. For example, no graphic object may be displayed on the user interface 732. Instead, the graphic object 736 may be displayed on the user interface 734. Specifically, if the frequency of the user's touches on a contact item is 10 times or more, no graphic object is displayed on the contact item. If the user touches a contact item between 5 times and 9 times, a graphic object showing a small amount of water drops may be displayed. If the user touches a contact item 4 times or less, a graphic object showing a large amount of water drops may be displayed.

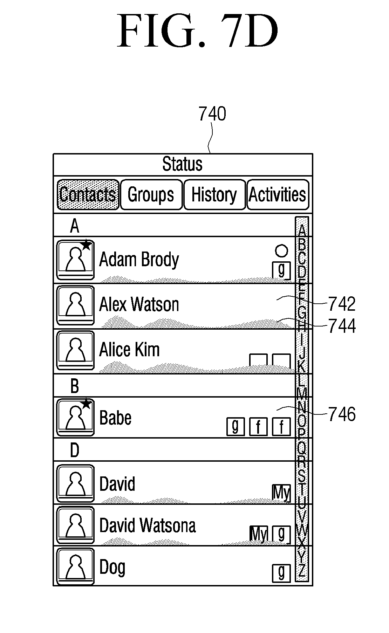

With reference to FIG. 7D, the touch screen 740 displays a list of contacts. The list includes a plurality of contact items. The contact items include user interfaces which are able to interact with the user. For example. user interfaces 742 and 746 are a portion of the contact items. The touch screen 740 may display a cloud graphic object 744. The shape of a graphic object displayed on a user interface may visually change according to the frequency of the user's touches of the user interface. For example, no graphic object may be displayed on the user interface 746. Instead, the graphic object 744 may be displayed on the user interface 742. Specifically, if the frequency of the user's touches on a contact item is 10 times or more, no graphic object may be displayed on the contact item. If the user touches a contact item between 5 times and 10 times, a graphic object showing a small amount of cloud may be displayed. If the user touches a contact item 11 times or less, a graphic object showing a large amount of cloud may be displayed.

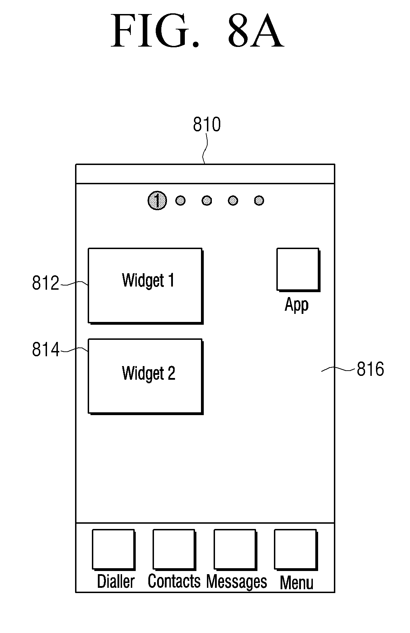

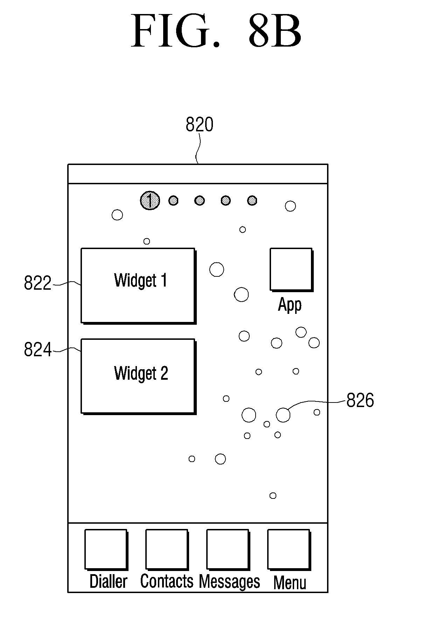

FIGs. 8A and 8B show that a graphic object is displayed on the touch screen of the electronic device when the user's unintentional input occurs according to an exemplary embodiment. With reference to FIG. 8A, a touch screen 810 displays a home screen including user interfaces 812 and 814. With reference to FIG. 8B, a touch screen 820 displays a home screen including user interfaces 822 and 824, and a graphic image 826. When the user's input is detected on the touch screen 820, the controller 110 may display the graphic image 826 based on environmental information.

On the home screen as shown in FIG. 8A, when the user's input is detected, the controller 110 may display the graphic image 826 on the home screen based on environmental information as shown in FIG. 8B.

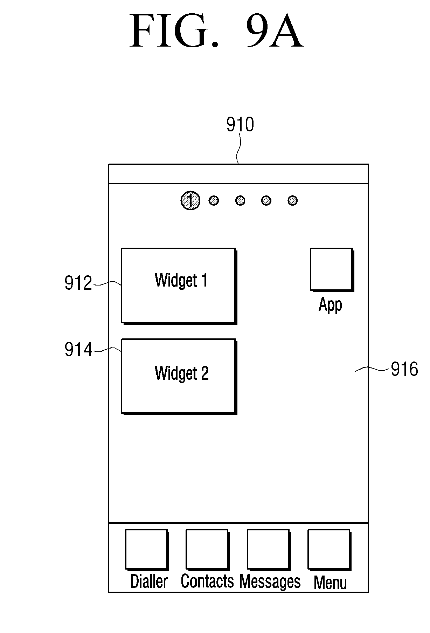

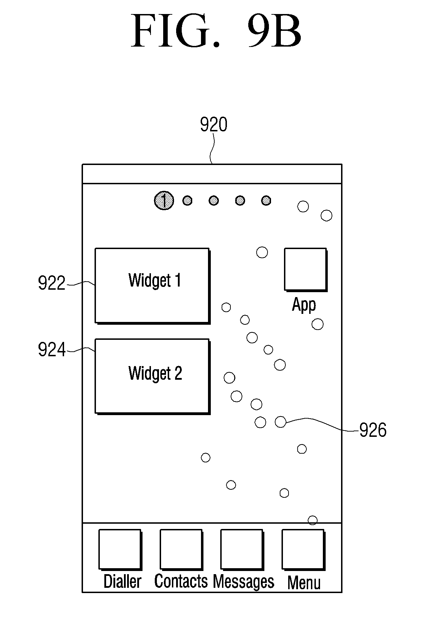

FIGs. 9A to 9D show that a graphic image is displayed on the touch screen of the electronic device by reflecting a state of another user's device according to an exemplary embodiment. With reference to FIG. 9A, a touch screen 910 displays a home screen including user interfaces 912 and 914. With reference to FIG. 9B, a touch screen 920 displays user interfaces 922 and 924, and a graphic image 926. In the state in which the home screen is displayed, the controller 110 may detect approach of another electronic device, and display the graphic image 926 corresponding to the detection result on the home screen based on environmental information.

The controller 110 may visually change and display a graphic image corresponding to the distance between another electronic device and the user's electronic device. For example, the controller 110 may display a rainy graphic image on the home screen when another electronic device approaches the user's electronic device. As the distance between another electronic device and the user's electronic device decreases, the controller 110 may display an increasing amount of rain on the home screen.

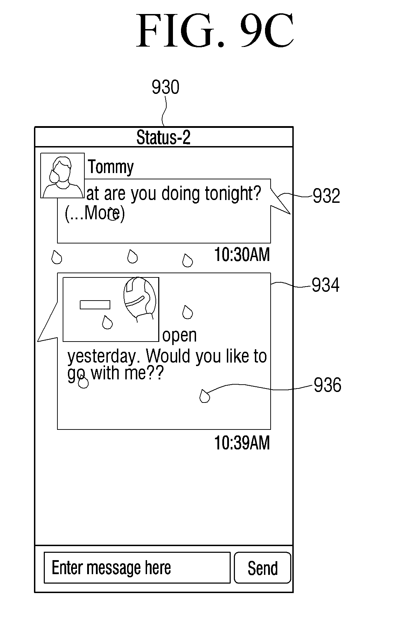

FIG. 9C shows a screen in which the user is talking to another person. With reference to FIG. 9C, speech bubbles 932 and 934 and a water drop graphic image 936 are displayed on a touch screen 930. The controller 110 receives weather information from the person "Tommy" through the mobile communication unit 120 or the sub-communication unit 130. The controller 110 may display the water drop graphic image 936 which corresponds to and reflects the received weather information, on the screen including the speech bubbles 932 and 934. The speech bubbles 932 and 934 may be user interfaces.

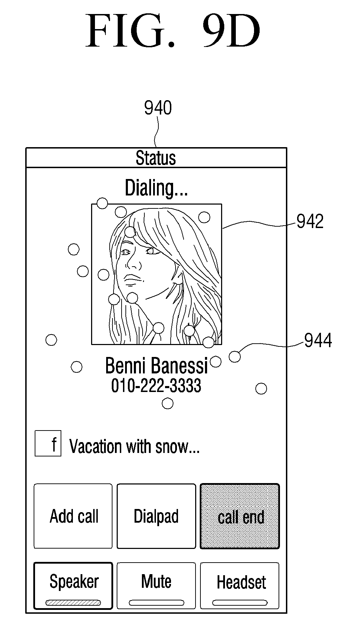

FIG. 9D shows a screen including a caller's image 942 and a graphic image 944 based on environmental information. When somebody calls, the controller 110 may display the caller's image 942 on the touch screen 940. The controller 110 may display the caller's image 942 and the graphic image 944 based on the caller's environmental information on the touch screen 940 according to a signal received from the mobile communication unit 120 or the sub-communication unit 130.

For example, the controller 110 may receive weather information for the caller's position together with the call. The controller 110 may receive the call and the caller's environmental information through the mobile communication unit 120 or the sub-communication unit 130, and display the caller's image and the graphic image on the touch screen based on the caller's environmental information. When it rains at the caller's position, the controller 110 may receive the call and display the caller's face image 942 and the water drop graphic image 944 indicating the weather for the caller's position on the touch screen 940.

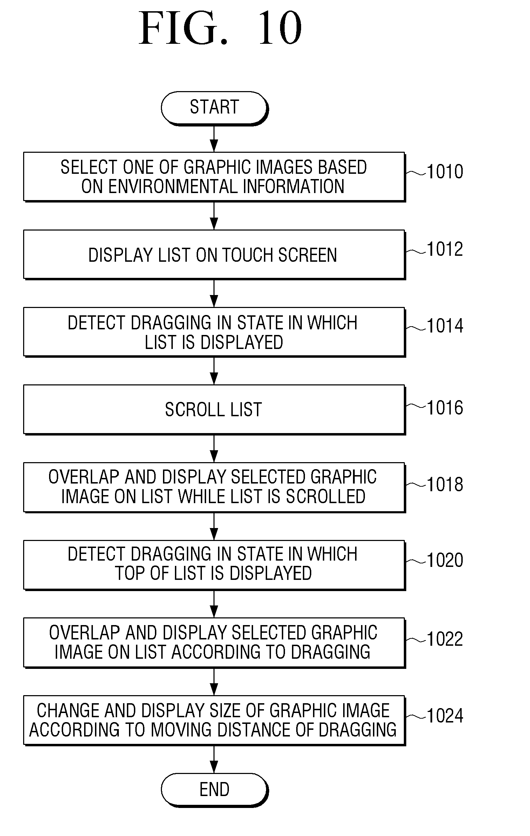

FIG. 10 is a flowchart showing a process of displaying a graphic image corresponding to a scrolling operation of a list displayed on the touch screen of the electronic device. With reference to FIGs. 1 and 10, in operation S1010, the controller 110 selects one of a plurality of graphic images based on environmental information. The environmental information may include weather information, position information of the electronic device 100, altitude information, and direction information. The weather information may be externally received through the mobile communication unit 120 or the sub-communication unit 130. The weather information may be information representing the weather, such as "sunny", "cloudy", "rainy", "snowy", and "lightening". The plurality of graphic images may be graphic images corresponding to the weather information. The plurality of graphic images may include a "sunny" graphic image, a "rainy" graphic image, a "cloudy" graphic image, a "snowy" graphic image, and a "lightening" graphic image.

In operation S1012, the controller 110 displays a list on the touch screen 190. The list may be a user interface in which a plurality of items are sequentially displayed, such as a list of contacts. In operation S1014, the controller 110 detects dragging in the state in which the list is displayed. In operation S1016, in the state in which the list is displayed on the touch screen 190, when the user touches and drags the list, the list is scrolled according to the dragging. In operation S1018, the controller 110 may overlap and display the graphic image selected in operation S1010 on the list while the list is scrolled. When the list is scrolled, items in the list move in the scrolling direction.

For example, when the user touches the list with a finger and drags the list down, the list is scrolled down and the top of the list is displayed. In the state in which the top of the list is displayed, when the controller 110 detects dragging in operation S1020, the controller 110 may overlap and display the graphic image selected in operation S1010 on the list according to the dragging in operation S1022.

When the user touches the list with a finger and drags the list up, the list is scrolled up and the bottom of the list is displayed. In the state in which the bottom of the list is displayed, when the controller 110 detects dragging, the controller 110 may overlap and display the graphic image selected in operation S 1010 on the list according to the dragging.

In the state in which the top of the list is displayed, when the controller 110 detects dragging, the controller 110 may measure a moving distance of the dragging. The moving distance of the dragging is a distance of moving the finger in the state in which the user contacts the touch screen 190 with the finger. In operation S1024, the controller 110 changes and displays the size of the graphic image according to the moving distance of the dragging.

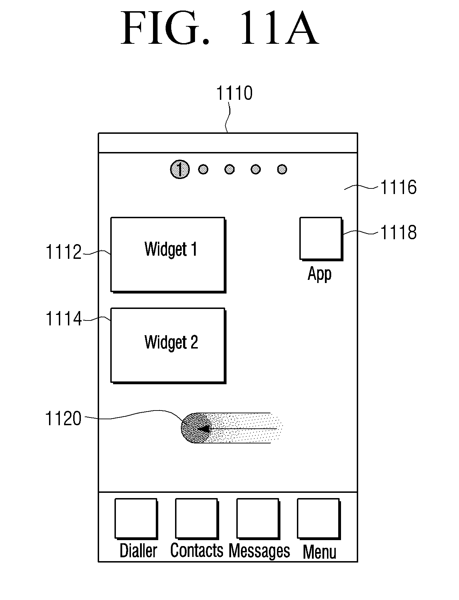

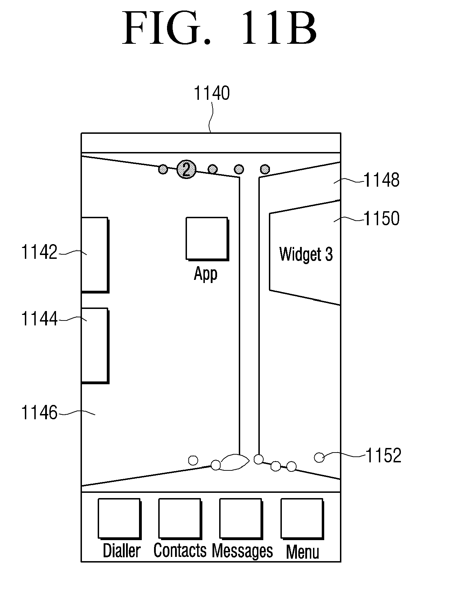

FIGs. 11A to 11C show an example of a process of displaying a graphic image when the user changes a home screen on the touch screen of the electronic device. With reference to FIG. 11A, a home screen 1116 is displayed on a touch screen 1110. The home screen 1116 includes user interfaces 1112, 1114, and 1118. The home screen 1116 may include a plurality of pages. On the home screen 1116 of FIG. 11A, a first page is displayed. When the user drags the first page of the home screen 1116 to the left 1120, a second page appears. The controller 110 may detect the dragging on the home screen 1116 including the user interfaces 1112, 1114, and 118, and display a graphic object based on environmental information in response to the dragging. While the page is changing, the controller 110 displays the graphic object, and when changing the page is complete, the controller 110 finishes displaying the graphic object. FIG. 11B shows the home screen changing from a first page 1146 to a second page 1148. On a touch screen 1140, portions of user interfaces 1142 and 1144 of the first page 1146 and a user interface 1150 of the second page 1148 are displayed. A space is generated between the first page 1146 and the second page 1148, and a graphic object 1152 is displayed in the space based on environmental information. For example, when the user changes a page by dragging the home screen including user interfaces on a snowy day, a space is displayed between the first page and the second page, and a snowy graphic object 1152 may be displayed in the space while the first page is changing to the second page.

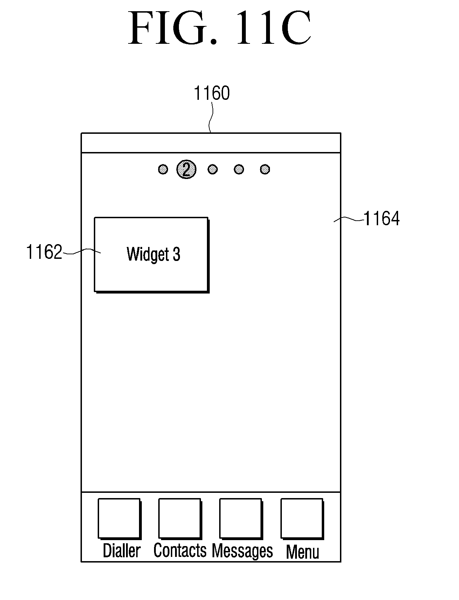

FIG. 11C shows a home screen after changing the page is complete. On a touch screen 1160, the user interface 1162 is displayed. The graphic object displayed on the touch screen while the page is changing disappears after changing the page is complete.

On the home screen including a plurality of pages, the controller 110 may detect the user's dragging on the first page, and change the first page to the second page according to the dragging.

While the first page is changing to the second page, the controller 110 may display a portion of the first page 1146, a portion of the second page 1148, and the space between the first page 1146 and the second page 1148 on the touch screen, and may display the graphic object 1152 in the space based on the environmental information.

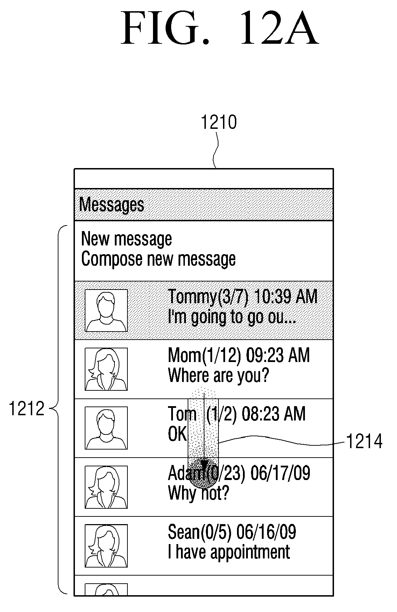

FIGs. 12A to 12C show a graphic image corresponding to operation of scrolling a list displayed on the touch screen of the electronic device. With reference to FIG. 12A, a message list 1212 is displayed on a touch screen 1210. When the user touches and drags the message list 1212 down 1214, the message list 1212 is scrolled. In FIG. 12A, the message list 1212 is scrolled up or down. However, it is possible to scroll the message list 1212 to the left or right or in diverse methods.

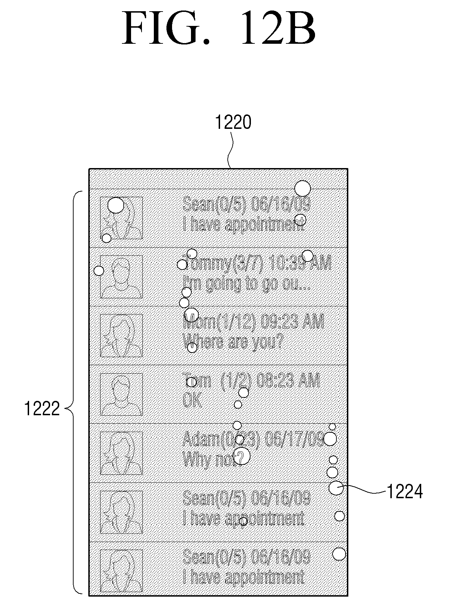

FIG. 12B shows a process of scrolling a message list 1222 on a touch screen 1220. The controller 110 may overlap and display a graphic object 1224 on the message list 1222 based on the environmental information while the message list 1222 is being scrolled.

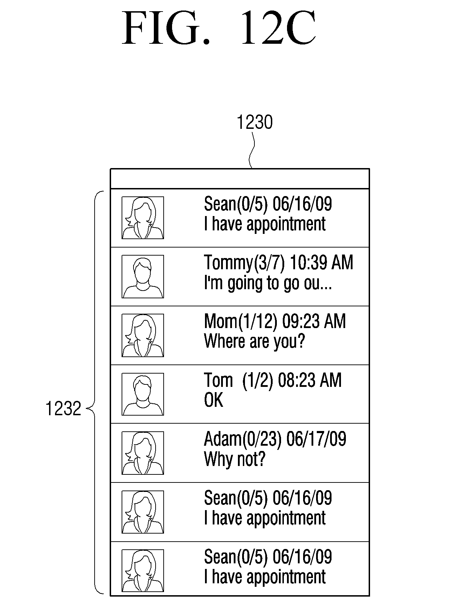

FIG. 12C shows a screen when scrolling the message list is finished. On a touch screen 1230, a message list 1232 is displayed in a stationary state.

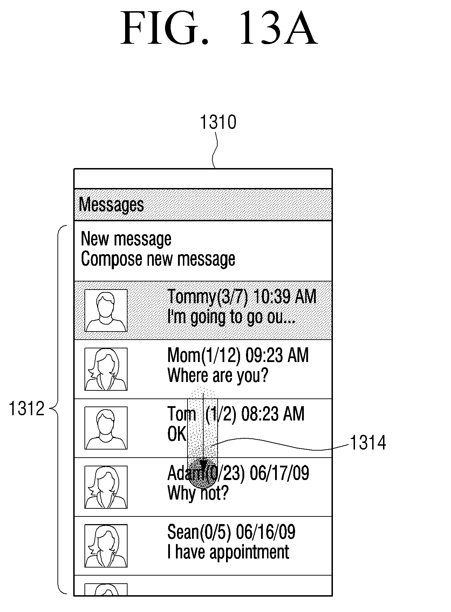

FIGs. 13A to 13E show that the size of a graphic image is changed and displayed according to a moving distance of the user's dragging operation when a list displayed on the touch screen of the electronic device is not scrolled any longer. With reference to FIG. 13A, a message list 1312 is displayed on a touch screen 1310. The message list 1312 is scrolled up to the top. When the user drags the message list 1312 down 1314, the message list 1312 cannot be scrolled any longer.

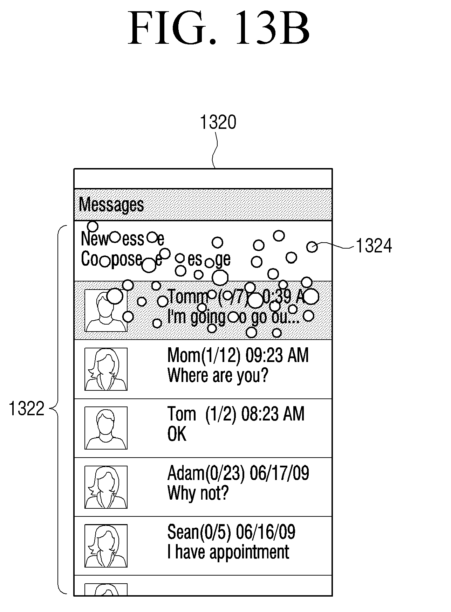

With reference to FIG. 13B, the top of a message list 1322 and a graphic object 1324 are displayed on a touch screen 1320. In the state in which the top of the message list 1322 is displayed on the touch screen 1320, when the user's dragging operation is detected, the controller 110 may display the graphic object 1324 based on environmental information according to the dragging operation. The controller 110 may continue displaying the graphic object 1324 on the touch screen 1320 while the user continues dragging. In the state in which the message list 1322 is displayed on the touch screen 1320, when the user drags the message list 1322, the controller 110 may measure the moving distance of the dragging. For example, when the user contacts the touch screen 1320 with a finger and moves the finger on the touch screen 1320, the controller 110 measures the moving distance of the finger. The controller 110 may adjust the size of an area to display the graphic object 1324 according to the moving distance of the dragging. The area to display the graphic object 1324 may vary according to the moving distance of the dragging.

In addition, the controller 110 may display a graphic image instead of a graphic object.

In the state in which the top of the message list 1322 is displayed on the touch screen 1320, when the user's dragging operation is detected, the controller 110 may display a graphic image based on environmental information according to the dragging operation.

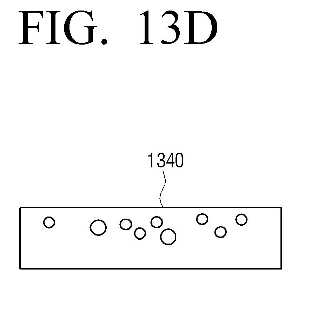

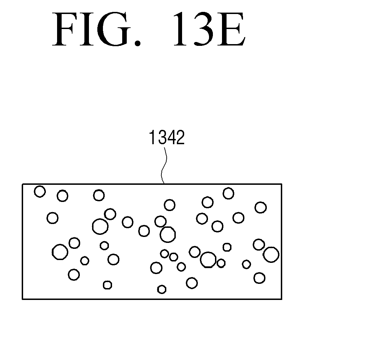

FIGs. 13D and 13E show that the size of an area to display a graphic object varies according to the moving distance of the dragging. The size of an area to display a graphic object 1340 as shown in FIG. 13D is different from the size of an area to display a graphic object 1342 as shown in FIG. 13E.

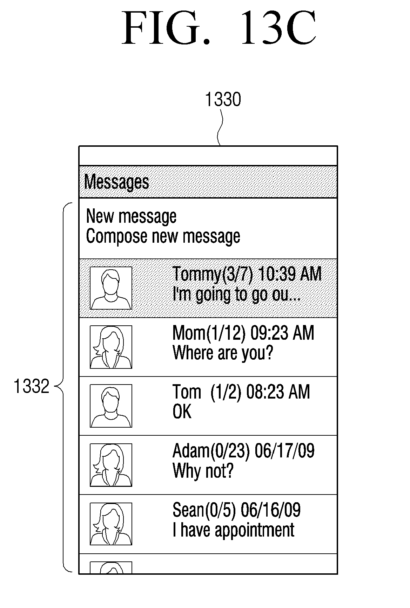

With reference to FIG. 13C, on a touch screen 1330, a message list 1332 is displayed, but a graphic object is not displayed. When dragging is finished, the controller 110 may not display a graphic objet on the screen.

In the state where a scrollable user interface is displayed on the touch screen, when the user's input is detected and it is possible to scroll the user interface, the controller 110 may scroll the user interface according to the user's input while the user's input is being detected, and may display a graphic image on the touch screen while the user interface is being scrolled. When it is impossible to scroll the user interface, the controller 110 may overlap and display a graphic object with the user interface according to the user's input while the user's input is being detected, and may allow the size of an area to display the graphic object to correspond to the moving distance of the user's input.

The content described above may be implemented with program commands which can be performed by diverse computer media, and may be recorded in a computer readable medium. The computer readable medium may include a program command, a data file, data structure, and the like separately or in combination. The program command recorded in the computer readable medium may be specifically designed or composed for the present invention, or may be known to those skilled in the computer software. The computer readable medium may include magnetic media such as hard disk, floppy disk, and magnetic tape, optical media such as compact disk read-only memory (CD-ROM) and digital video disk (DVD), magneto-optical media such as floptical disk, and hardware devices which are specifically composed to store and run a program command, such as ROM, RAM, and flash memory. The program command may include a machine language code made by a compiler, and a high level language code which can be run by a computer using an interpreter. The hardware device may be composed to operate as one or more software modules to perform the operation, and vice versa.

The foregoing exemplary embodiments and advantages are merely exemplary and are not to be construed as limiting the present invention. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. An electronic device, comprising:
a touch screen configured to detect a user input; and
a controller configured to:
select a graphic image from among a plurality of graphic images based on environmental information and provide the selected graphic image to a first layer,
display the first layer on the touch screen,
display a second layer which provides a user interface behind the first layer,
display a third layer which provides a graphic object corresponding to the user interface behind the second layer, and
visually change the graphic image provided on the first layer based on the user input to the user interface provided on the second layer.

2. The electronic device as claimed in claim 1, wherein the controller visually changes and displays the graphic object provided on the third layer over time.

3. The electronic device as claimed in claim 1 or claim 2, wherein the controller selects the graphic object from among a plurality of graphic objects based on the environmental information, and provides the graphic object to the third layer.

4. The electronic device as claimed in any one of claims 1 to 3, further comprising a sensor unit,
wherein the controller visually changes the graphic object based on a signal from the sensor unit, and provides the changed graphic object to the third layer.

5. The electronic device as claimed in any one of claims 1 to 4, wherein the controller displays the graphic object provided on the third layer around the user interface provided on the second layer.

6. The electronic device as claimed in any one of claims 1 to 5, wherein the controller visually changes and displays the graphic object based on frequency of the user input on the user interface.

7. The electronic device as claimed in any one of claims 1 to 6, wherein the controller visually changes and displays the graphic object according to position information of the electronic device.

8. A screen display method of an electronic device including a touch screen, the method comprising:
selecting a graphic image from among a plurality of graphic images based on environmental information and providing the selected graphic image to a first layer;
displaying the first layer on the touch screen;
displaying a second layer which provides a user interface behind the first layer;
displaying a third layer which provides a graphic object corresponding to the user interface behind the second layer; and
visually changing and displaying the graphic image provided on the first layer, based on a user input to the user interface provided on the second layer.

9. The screen display method as claimed in claim 8, further comprising:
visually changing and displaying the graphic object provided on the third layer over time.

10. The screen display method as claimed in claim 8 or claim 9, further comprising:
selecting one of a plurality of graphic objects based on the environmental information, and providing the selected graphic object to the third layer.

11. The screen display method as claimed in any one of claims 8 to 10, further comprising:
visually changing the graphic object based on a signal output from a sensor unit included in the electronic device, and providing the changed graphic object to the third layer.

12. The screen display method as claimed in any one of claims 8 to 11, further comprising:
displaying the graphic object provided on the third layer around the user interface provided on the second layer.

13. The screen display method as claimed in any one of claims 8 to 12, further comprising:
visually changing and displaying the graphic object based on frequency of the user's input on the user interface.

14. The screen display method as claimed in any one of claims 8 to 13, further comprising:
visually changing and displaying the graphic object according to position information of the electronic device.
